# EUROPEAN PATENT APPLICATION

(11) **EP 4 560 953 A1**
(43) Date of publication of application: **28.05.2025**
(21) Application number: 23841981.6
(22) Date of filing: 16.06.2023
(51) Int. Cl.: H04L 1/18

(54) **PDU SET SENDING METHOD AND APPARATUS, AND COMMUNICATION NODE**

(30) Priority: 21.07.2022 CN 202210865606
(71) Applicant: Datang Mobile Communications Equipment Co., Ltd., Beijing 100085 (CN)
(72) Inventor: FU, Jing, Beijing 100085 (CN); CHEN, Li, Beijing 100085 (CN)
(74) Representative: Studio Torta S.p.A.
(86) International application number: PCT/CN2023/100696
(87) International publication number: WO 2024/016915

(57) **Abstract**

Provided in the embodiments of the present disclosure are a PDU set sending method and apparatus, and a communication node, wherein the PDU set sending method and apparatus are applied to a first communication node. The method comprises: acquiring auxiliary information, by means of which a receiving end node processes a PDU set; and sending the PDU set according to the auxiliary information, by means of which the receiving end node processes the PDU set.

## Description

### CROSS-REFERENCES TO RELATED APPLICATIONS

The present application claims priority to Chinese patent application No. 202210865606.6 filed on July 21, 2022, entitled "PDU Set Sending Method and Apparatus, and Communication Node", which is hereby incorporated by reference in its entirety.

### FIELD

The present application relates to the field of wireless communications, and in particular, to methods and apparatuses for packet data unit (PDU) set transmission, and communication nodes.

### BACKGROUND

The 5th generation mobile communication (5G) system supports video services such as eXtended reality (XR) and cloud gaming. In view of transmission characteristics of XR services, a higher layer introduces a concept of a packet data unit (PDU) set (also called PDU set). One or more PDUs corresponding to a same information unit can constitute a PDU set.

PDUs in a PDU set have certain association. For example, in some cases, all PDUs in a PDU set are necessary. A receiver may use information included in a PDU set only if all PDUs in the PDU set are correctly received. For example, in some cases, even if some PDUs in the PDU set are lost, the receiver may recover data based on association between PDUs in the PDU set, thereby using the information included in the PDU set. However, the industry currently has no effective solution about how to transmit a PDU set based on association between PDUs in the PDU set.

### BRIEF SUMMARY

In view of problems in the related art, embodiments of the present application provide methods and apparatuses for packet data unit (PDU) set transmission, and communication nodes.

An embodiment of the present application provides a method for packet data unit (PDU) set transmission, performed by a first communication node, including:
obtaining assistance information for a receiver node processing a PDU set; and
transmitting the PDU set based on the assistance information for the receiver node processing the PDU set.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, the receiver node processing the PDU set includes one or more of the following:
configuring transmission of the PDU set, scheduling transmission of the PDU set, discarding the PDU set, assigning a priority to the PDU set, and processing the PDU set based on the priority of the PDU set.

In an embodiment, obtaining the assistance information for the receiver node processing the PDU set includes:
receiving the assistance information for the receiver node processing the PDU set transmitted from a second communication node.

In an embodiment, receiving the assistance information for the receiver node processing the PDU set transmitted from the second communication node includes:
receiving the assistance information for the receiver node processing the PDU set transmitted from the second communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
transmitting a first request message to the second communication node, where the first request message is used to request the assistance information for the receiver node processing the PDU set; and receiving the assistance information for the receiver node processing the PDU set transmitted from the second communication node.

In an embodiment, the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set with a first priority.

In an embodiment, the first communication node includes a terminal, and receiving the assistance information for the receiver node processing the PDU set transmitted from the second communication node includes:
receiving the assistance information for the receiver node processing the PDU set transmitted from an access network node or a core network node.

In an embodiment, the first communication node includes an access network node, and receiving the assistance information for the receiver node processing the PDU set transmitted from the second communication node includes:
receiving the assistance information for the receiver node processing the PDU set transmitted from a terminal or a core network node.

In an embodiment, the first communication node includes a distributed unit of an access network node, and receiving the assistance information for the receiver node processing the PDU set transmitted from the second communication node includes:
receiving the assistance information for the receiver node processing the PDU set transmitted from a central unit of the access network node.

In an embodiment, the receiver node includes a terminal, an access network node, a core network node, an application layer or an application layer server.

An embodiment of the present application further provides a method for PDU set transmission, performed by a second communication node, including:
transmitting assistance information for a receiver node processing a PDU set to a first communication node.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, transmitting the assistance information for the receiver node processing the PDU set to the first communication node includes:
transmitting the assistance information for the receiver node processing the PDU set to the first communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
receiving a first request message transmitted from the first communication node, where the first request message is used to request the assistance information for the receiver node processing the PDU set; and transmitting the assistance information for the receiver node processing the PDU set to the first communication node based on the first request message.

In an embodiment, the second communication node includes a terminal, an access network node, a core network node or a central unit of an access network node.

An embodiment of the present application further provides a first communication node, including a memory, a transceiver and a processor,
where the memory is used for storing a computer program, the transceiver is used for receiving and transmitting data under control of the processor, and the processor is used for reading the computer program in the memory and performing the following operations:
obtaining assistance information for a receiver node processing a PDU set; and
transmitting the PDU set based on the assistance information for the receiver node processing the PDU set.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, the receiver node processing the PDU set includes one or more of the following:
configuring transmission of the PDU set, scheduling transmission of the PDU set, discarding the PDU set, assigning a priority to the PDU set, and processing the PDU set based on the priority of the PDU set.

In an embodiment, obtaining the assistance information for the receiver node processing the PDU set includes:
receiving the assistance information for the receiver node processing the PDU set transmitted from a second communication node.

In an embodiment, receiving the assistance information for the receiver node processing the PDU set transmitted from the second communication node includes:
receiving the assistance information for the receiver node processing the PDU set transmitted from the second communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
transmitting a first request message to the second communication node, where the first request message is used to request the assistance information for the receiver node processing the PDU set; and receiving the assistance information for the receiver node processing the PDU set transmitted from the second communication node.

In an embodiment, the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set with a first priority.

In an embodiment, the first communication node includes a terminal, and receiving the assistance information for the receiver node processing the PDU set transmitted from the second communication node includes:
receiving the assistance information for the receiver node processing the PDU set transmitted from an access network node or a core network node.

In an embodiment, the first communication node includes an access network node, and receiving the assistance information for the receiver node processing the PDU set transmitted from the second communication node includes:
receiving the assistance information for the receiver node processing the PDU set transmitted from a terminal or a core network node.

In an embodiment, the first communication node includes a distributed unit of an access network node, and receiving the assistance information for the receiver node processing the PDU set transmitted from the second communication node includes:
receiving the assistance information for the receiver node processing the PDU set transmitted from a central unit of the access network node.

In an embodiment, the receiver node includes a terminal, an access network node, a core network node, an application layer or an application layer server.

An embodiment of the present application further provides a second communication node, including a memory, a transceiver and a processor,
where the memory is used for storing a computer program, the transceiver is used for receiving and transmitting data under control of the processor, and the processor is used for reading the computer program in the memory and performing the following operations:
transmitting assistance information for a receiver node processing a PDU set to a first communication node.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, transmitting the assistance information for the receiver node processing the PDU set to the first communication node includes:
transmitting the assistance information for the receiver node processing the PDU set to the first communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
receiving a first request message transmitted from the first communication node, where the first request message is used to request the assistance information for the receiver node processing the PDU set; and transmitting the assistance information for the receiver node processing the PDU set to the first communication node based on the first request message.

In an embodiment, the second communication node includes a terminal, an access network node, a core network node or a central unit of an access network node.

An embodiment of the present application further provides an apparatus for PDU set transmission, including:
an obtaining unit, used for obtaining assistance information for a receiver node processing a PDU set; and
a first transmitting unit, used for transmitting the PDU set based on the assistance information for the receiver node processing the PDU set.

An embodiment of the present application further provides an apparatus for PDU set transmission, including:
a second transmitting unit, used for transmitting assistance information for a receiver node processing a PDU set to a first communication node.

An embodiment of the present application further provides a computer-readable storage medium, where the computer-readable storage medium stores a computer program, and the computer program is used to cause a computer to perform the methods for PDU set transmission describe above.

An embodiment of the present application further provides a communication device, where the communication device stores a computer program, and the computer program is used to cause a communication device to perform the methods for PDU set transmission describe above.

An embodiment of the present application further provides a processor-readable storage medium, where the processor-readable storage medium stores a computer program, and the computer program is used to cause a processor to perform the methods for PDU set transmission describe above.

An embodiment of the present application further provides a chip product, where the chip product stores a computer program, and the computer program is used to cause a chip product to perform the methods for PDU set transmission describe above.

In the methods and apparatuses for PDU set transmission, and the communication nodes provided by the embodiment of the present application, the first communication node may obtain the assistance information for the receiver node processing the PDU set. Therefore, when transmitting the PDU set to the receiver node, the first communication node may combine the assistance information for the receiver node processing the PDU set, to perform appropriate PDU set transmission processing, thereby ensuring that the corresponding PDU set may be correctly and timely transmitted to the receiver, or terminating the transmission of the PDU set in time, so that transmission resources are saved, and utilization efficiency of transmission resources is improved.

### BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of data frame segmentation according to the related art;
FIG. 2 is a schematic diagram of a partial architecture of a 5th generation mobile communication (5G) network according to the related art;
FIG. 3 is a first flowchart diagram of a method for packet data unit (PDU) set transmission according to an embodiment of the present application;
FIG. 4 is a second flowchart diagram of a method for PDU set transmission according to an embodiment of the present application;
FIG. 5 is a structural schematic diagram of a first communication node according to an embodiment of the present application;
FIG. 6 is a structural schematic diagram of a second communication node according to an embodiment of the present application;
FIG. 7 is a first structural schematic diagram of an apparatus for PDU set transmission according to an embodiment of the present application; and
FIG. 8 is a second structural schematic diagram of an apparatus for PDU set transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding of solutions of embodiments of the present application, some contents related to embodiments of the present application are first introduced.

### 1. Basic Concepts of eXtended reality (XR)

The 5th generation mobile communication (5G) system introduces XR services. The XR services are divided into the following categories.
(1) Augmented reality (AR): real world and virtual world are seamlessly integrated, which is half real and half fake.
(2) Virtual reality (VR): devices are used to simulate virtual world, which is all fake.
(3) Mixed reality (MR): both real physical entities and virtual information are contained.

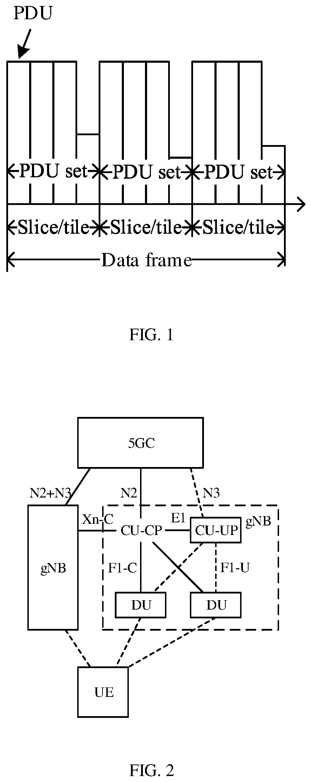

XR services are modeled based on data frames. FIG. 1 is a schematic diagram of data frame segmentation according to the related art. As shown in FIG. 1, a same data frame may be segmented into multiple PDUs. One or more PDUs corresponding to a same information unit (sliced or tiled) constitute one PDU set. PDUs in a PDU set have certain association. For example, in some embodiments, all PDUs in a PDU set are necessary. A receiver can only use information included in a PDU set when all PDUs in the PDU set are correctly received. However, in some embodiments, when some PDUs in a PDU set are lost, the receiver can perform data recover. After data is recovered, the receiver can still use information included in the PDU set.

### 2. 5G network architecture

FIG. 2 is a schematic diagram of a partial architecture for a 5G network according to the related art, which shows a partial architecture closely related to an air interface. As shown in FIG. 2, in the new radio(NR) and similar communication systems, a logical radio access network (RAN) node (such as a base station) can be further divided into one central unit-control plane (CU-CP), one or more central unit-user planes (CU-UPs) (in the figure, only one CU-UP is taken as an example), and one or more distributed units (DUs). This structure is called "CU-CP/UP split". The CU-CP is connected to the DU by an F1-C or similar interface, and the CU-CP is connected to the CU-UP by an E1 or similar interface. A control plane connection between an RAN node and a core network or/other RAN nodes terminates at the CU-CP, a user plane connection ends at the CU-UP, and an air interface connection between an RAN node and a terminal (also known as user equipment, (UE)) terminates at the DU.

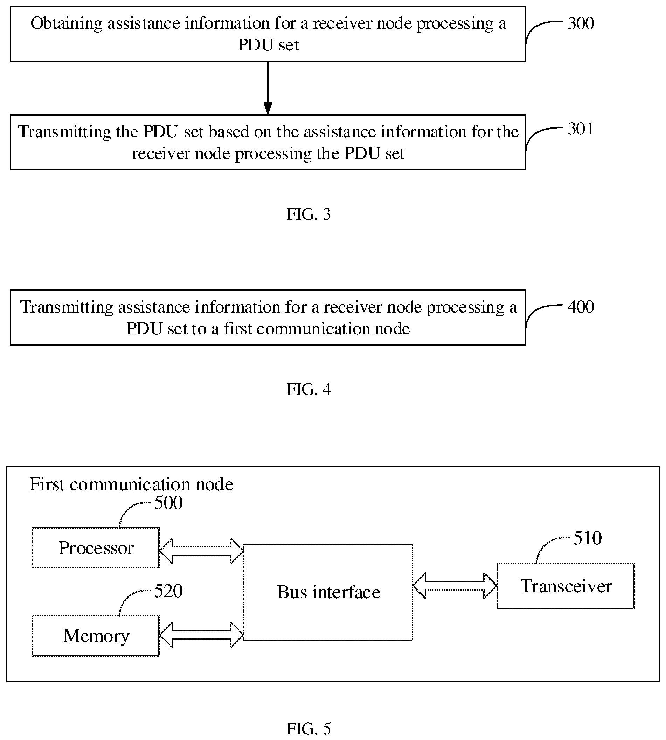

FIG. 3 is a first flowchart diagram of a method for PDU set transmission according to an embodiment of the present application. The method is performed by a first communication node. As shown in FIG. 3, the method includes the following steps.

Step 300: obtaining assistance information for a receiver node processing a PDU set.

Step 301: transmitting the PDU set based on the assistance information for the receiver node processing the PDU set.

In an embodiment, the first communication node may be a transmitting node, that is, a communication node that transmits the PDU set. For example, the transmitting node may include a terminal, an access network node (such as a base station), a distributed node (DU) of an access network node, etc.

In an optional embodiment, the first communication node may also be a communication node that performs configuration or scheduling on a transmitting node transmitting a PDU set. For example, in case that the transmitting node is a terminal, the first communication node may include an access network node that performs configuration or scheduling on the terminal transmitting a PDU set. The access network node may obtain assistance information for the receiver node processing the PDU set, and process the PDU set based on the assistance information for the receiver node processing the PDU set.

In an embodiment, the receiver node may include a terminal, an access network node, a core network node, an application layer or an application layer server. For example, the terminal transmits a PDU set to an access network node, a core network node, an application layer or an application layer server. For example, the access network node transmits a PDU set to the terminal. For example, a DU of the access network node transmits a PDU set to the terminal, the core network node, other DU nodes, a CU node or an application layer server.

The application layer may be an application (APP) running on the terminal. The application layer server may be an application server (APP server) or an application function (AF).

In the embodiment of the present application, the first communication node may obtain assistance information for the receiver node processing the PDU set. The assistance information may be some relevant information for the receiver node processing the PDU set, and is not limited here. Therefore, the first communication node may perform appropriate PDU set transmission processing in combination with the assistance information for the receiver node processing the PDU set when transmitting the PDU set to the receiver node (or scheduling or configuring the transmitting node transmitting the PDU set) based on the obtained assistance information (such as a capability to recover the PDU set based on association between the PDUs in the PDU set or an requirement for duration of receiving the entire PDU set, etc.).

In an embodiment, the first communication node may obtain the assistance information for the receiver node processing the PDU set from the receiver node, or the first communication node may obtain the assistance information for the receiver node processing the PDU set from a third-party node (a communication node other than the first communication node and the receiver node), or the first communication node locally stores its assistance information for itself processing the PDU set in case that the first communication node is the receiver node.

In an embodiment of the present application, the first communication node may process the PDU set based on the assistance information for the receiver node processing the PDU set. Processing the PDU set may include one or more of the following: configuring transmission of the PDU set, scheduling transmission of the PDU set, discarding the PDU set, assigning a priority to the PDU set, and processing the PDU set based on the priority of the PDU set.

In an embodiment, the receiver node processing the PDU set includes one or more of the following: configuring transmission of the PDU set, scheduling transmission of the PDU set, discarding the PDU set, assigning a priority to the PDU set, and processing the PDU set based on the priority of the PDU set.

In an embodiment, the assistance information for the receiver node processing the PDU set may include one or more of the following.
(1) In case that all PDUs in the PDU set are correctly received, the receiver node uses information included in the PDU set.
   For example, in case that the access network node transmits a PDU set to the terminal, and the access network node learns that "the terminal may use the information included in the PDU set only if all PDUs in the PDU set are correctly received", the access network node may configure a link with a good signal quality and a low bit error rate for link transmitting the corresponding PDU set, or increase a priority of transmitting the PDU set, to ensure that the corresponding PDU set may be correctly and timely transmitted to the terminal.
(2) In case that a first ratio of PDUs in the PDU set are correctly received, the receiver node recovers the PDU set based on the correctly received PDUs. Alternatively, in case that more than the first ratio of PDUs in the PDU set are not correctly received, the receiver node does not recover the PDU set.

For example, in case that the access network node transmits a PDU set to the terminal, and the access network node learns that "in case that x% (x is an integer greater than 1 and less than or equal to 100) of PDUs in the PDU set are correctly received, the terminal may recover the PDU set based on the correctly received PDUs", the access network node may configure a link or a transmission mode with an accuracy rate higher than or equal to x% for the corresponding PDU set, to ensure that the terminal may use the information included in the PDU set; or, in case that the access network node finds that more than (1-x%) of the PDUs in the corresponding PDU set are not correctly transmitted to the terminal, the access network node would consider that it is useless to continue to transmit the PDU set, and may not continue to transmit the PDU set to the terminal. Furthermore, the access network node may discard the PDU set to save transmission resources and improve utilization efficiency of transmission resources.

For example, in case that the access network node transmits a PDU set to the terminal, and the access network node learns that "in case that more than x% (x is an integer greater than 1 and less than or equal to 100) of the PDUs in the PDU set are not correctly received, the terminal cannot recover the PDU set", the access network node may configure a link or a transmission mode with an accuracy rate greater than or equal to (1-x%) for the corresponding PDU set, to ensure that the terminal may use the information included in the PDU set. Alternatively, in case that the access network node finds that more than x% of the PDUs in the corresponding PDU set are not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(3) In case that a first quantity of PDUs in the PDU set are correctly received, the receiver node recovers the PDU set based on the correctly received PDUs. Alternatively, in case that more than the first quantity of PDUs in the PDU set are not correctly received, the receiver node does not recover the PDU set.

For example, in case that the access network node transmits a PDU set to the terminal, and the access network node learns that "in case that k (k is an integer greater than or equal to 1) PDUs in the PDU set are correctly received, the terminal may recover the PDU set based on the correctly received PDUs", the access network node may configure a link or a transmission mode with a corresponding accuracy for the corresponding PDU set, to ensure that the terminal may use the information included in the PDU set. Alternatively, in case that the access network node finds that there are more than (K-k) PDUs in the corresponding PDU set that are not correctly transmitted to the terminal (K represents a total quantity of PDUs in the PDU set), the access network node would consider that it is useless to continue to transmit the PDU set, and may not continue to transmit the PDU set to the terminal. Furthermore, the access network node may discard the PDU set to save transmission resources and improve the utilization efficiency of transmission resources.

For example, in case that the access network node transmits a PDU set to the terminal, and the access network node learns that "in case that more than k (k is an integer greater than or equal to 1) PDUs in the PDU set are not correctly received, the terminal cannot recover the PDU set", the access network node may configure a link or a transmission mode with a corresponding accuracy for the corresponding PDU set, to ensure that the terminal may use the information included in the PDU set. Alternatively, in case that the access network node finds that more than k PDUs in the corresponding PDU set are not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(4) In case that a front second quantity of PDUs in the PDU set are correctly received, the receiver node recovers the PDU set based on the correctly received PDUs.

For example, in case that the access network node transmits a PDU set to the terminal, and the access network node learns that "in case that front n (n is an integer greater than or equal to 1) PDUs in the PDU set are correctly received, the terminal may recover the PDU set based on the correctly received PDUs", the access network node may assign a scheduling priority of the front n PDUs in the corresponding PDU set to be high, and prioritize to schedule transmission of these PDUs. Alternatively, in case that the access network node finds that at least one of the front n PDUs in the corresponding PDU set is not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(5) In case that a front second ratio of PDUs in the PDU set are correctly received, the receiver node recovers the PDU set based on the correctly received PDUs.

For example, in case that the access network node transmits a PDU set to the terminal, and the access network node learns that "in case that front y% (y is an integer greater than 1 and less than or equal to 100) PDUs in the PDU set are correctly received, the terminal may recover the PDU set based on the correctly received PDUs", the access network node may assign a scheduling priority of the front y% PDUs in the corresponding PDU set to high, and prioritize to schedule transmission of these PDUs. Alternatively, in case that the access network node finds that at least one of the front y% PDUs in the corresponding PDU set is not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(6) A maximum duration for the receiver node receiving the PDU set starting from reception of a first PDU in the PDU set.

For example, in case that the access network node transmits a PDU set to the terminal, and the access network node learns that "a maximum duration for a receiver node receiving the PDU set starting from reception of a first PDU in the PDU set is T (T is only an example here, and its value is not limited)", when the access network node schedules a corresponding downlink PDU set, it needs to ensure that all PDUs in the downlink PDU set are delivered to the terminal within time T. Alternatively, in case that the entire downlink PDU set is not delivered to the terminal within time T, the access network node considers that it is useless to continue to deliver the PDU set, and may not continue to transmit the PDU set to the terminal. Furthermore, the access network node may discard the PDU set to save transmission resources and improve the utilization efficiency of transmission resources.

In the method for PDU set transmission provided by the embodiment of the present application, the first communication node may obtain the assistance information for the receiver node processing the PDU set. Therefore, when transmitting the PDU set to the receiver node, the first communication node may combine the assistance information for the receiver node processing the PDU set, to perform appropriate PDU set transmission processing, thereby ensuring that the corresponding PDU set may be correctly and timely transmitted to the receiver, or terminating the transmission of the PDU set in time, so that transmission resources are saved, and utilization efficiency of transmission resources is improved.

In an embodiment, obtaining the assistance information for the receiver node processing the PDU set includes:
receiving the assistance information for the receiver node processing the PDU set transmitted from a second communication node.

In an embodiment, the first communication node may receive the assistance information for the receiver node processing the PDU set transmitted from the second communication node, to obtain the assistance information for the receiver node processing the PDU set.

The second communication node may be a receiver node or other communication nodes other than the first communication node and the receiver node.

In an embodiment, the first communication node includes a terminal, and receiving the assistance information for the receiver node processing the PDU set transmitted from the second communication node may include: receiving the assistance information for the receiver node processing the PDU set transmitted from an access network node or a core network node.

For example, the terminal transmits a PDU set to an access network node, a core network node, an application layer or an application layer server, and the terminal receives assistance information for the receiver node processing the PDU set transmitted from the access network node or the core network node.

In an embodiment, the first communication node includes an access network node, and receiving the assistance information for the receiver node processing the PDU set transmitted from the second communication node may include: receiving the assistance information for the receiver node processing the PDU set transmitted from a terminal or a core network node.

For example, the terminal transmits a PDU set to an access network node, a core network node, an application layer or an application layer server, and the access network node receives assistance information for the receiver node processing the PDU set transmitted from the terminal or the core network node.

For example, the access network node transmits a PDU set to the terminal, and the access network node receives assistance information for the receiver node processing the PDU set transmitted from the terminal or the core network node.

In an embodiment, the first communication node includes a distributed unit of an access network node, and receiving the assistance information for the receiver node processing the PDU set transmitted from the second communication node may include: receiving the assistance information for the receiver node processing the PDU set transmitted from a central unit of the access network node.

For example, the DU of the access network node transmits a PDU set to a terminal, a core network node, other DU nodes, a central unit (CU) or an application layer server, and the DU of the access network node receives assistance information for the receiver node processing the PDU set transmitted from the CU node of the access network node.

In an embodiment, receiving the assistance information for the receiver node processing the PDU set transmitted from the second communication node includes:
receiving the assistance information for the receiver node processing the PDU set transmitted from the second communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
transmitting a first request message to the second communication node, where the first request message is used to request the assistance information for the receiver node processing the PDU set; and receiving the assistance information for the receiver node processing the PDU set transmitted from the second communication node.

In an embodiment, the second communication node transmits the assistance information for the receiver node processing the PDU set to the first communication node, which may be actively transmitted from the second communication node to the first communication node, or may be transmitted from the second communication node based on a request of the first communication node.

In an embodiment, the second communication node may transmit the assistance information for the receiver node processing the PDU set to the first communication node during a procedure of establishing a PDU session, a QoS flow, a bearer or a logical channel corresponding to the PDU set (the PDU set refers to the PDU set transmitted to the receiver node), and/or during a procedure of modifying a PDU session, a QoS flow, a bearer or a logical channel corresponding to the PDU set. For example, the second communication node may transmit the assistance information for the receiver node processing the PDU set to the first communication node by carrying the assistance information for the receiver node processing the PDU set in an interactive message between the first communication node during the procedures of establishing and/or modifying the PDU session, the QoS flow, the bearer or the logical channel.

In an embodiment, the first communication node may transmit a first request message to the second communication node, to request the second communication node to transmit the assistance information for the receiver node processing the PDU set.

In an embodiment, the first request message may be used to request one or more of the following.
(1) Assistance information for the receiver node processing a first PDU set.
   The first PDU set refers to a certain part of a PDU set, or refers to a specified PDU set. For example, the first communication node may request assistance information for the receiver node processing a certain or some PDU sets, to properly process the transmission of the PDU set.
(2) Assistance information for the receiver node processing a first type of PDU set.
   The first type of PDU set refers to a certain part of a PDU set, or refers to a specified type of PDU set. For example, the first communication node may request assistance information for the receiver node processing a certain or some types of PDU sets, to properly process the transmission of the type of PDU set.
(3) Assistance information for the receiver node processing a PDU set corresponding to a first PDU session.
   The PDU set corresponding to the first PDU session refers to a PDU set corresponding to a certain part of a PDU session, or refers to a PDU set corresponding to a specified PDU session. For example, the first communication node may request assistance information for the receiver node processing a PDU set corresponding to a certain or some PDU sessions, to properly process the transmission of the PDU set corresponding to the PDU session.
(4) Assistance information for the receiver node processing a PDU set corresponding to a first QoS flow.
   The PDU set corresponding to the first QoS flow refers to a PDU set corresponding to a certain part of a QoS flow, or refers to a PDU set corresponding to a specified QoS flow. For example, the first communication node may request assistance information for the receiver node processing a PDU set corresponding to a certain or some QoS flows, to properly process the transmission of the PDU set corresponding to the QoS flow.
(5) Assistance information for the receiver node processing a PDU set corresponding to a first bearer or a first logical channel.
   The PDU set corresponding to the first bearer or the first logical channel refers to a PDU set corresponding to a certain part of a bearer or a certain part of a logical channel, or refers to a PDU set corresponding to a specified bearer or a specified logical channel. For example, the first communication node may request assistance information for the receiver node processing the PDU set corresponding to a certain or some bearers or a certain or some logical channels, to properly process the transmission of the PDU set corresponding to the bearer or the logical channel.
(6) Assistance information for the receiver node processing a PDU set corresponding to a first service.
   The PDU set corresponding to the first service refers to a PDU set corresponding to a certain part of a service, or refers to a PDU set corresponding to a specified service. For example, the first communication node may request assistance information for the receiver node processing a PDU set corresponding to a certain or some services, to properly process the transmission corresponding to the PDU set of the service.
(7) Assistance information for the receiver node processing a PDU set with a first priority.

The PDU set of the first priority refers to a PDU set with a certain part with a priority, or refers to a PDU set with a specified priority. For example, the first communication node may request assistance information for the receiver node processing a PDU set with a certain or some priorities, to properly process the transmission of the PDU set with the priority.

It should be noted that, in case that the second communication node actively transmits the assistance information for the receiver node processing the PDU set to the first communication node, the assistance information for the receiver node processing the PDU set may also include one or more of the above (1) - (7). For example, the second communication node may transmit, to the first communication node, the assistance information for the receiver node processing the first PDU set, the assistance information for the receiver node processing the first type of PDU set, the assistance information for the receiver node processing the PDU set corresponding to the first PDU session, the assistance information for the receiver node processing the PDU set corresponding to the first QoS flow, the assistance information for the receiver node processing the PDU set corresponding to the first bearer or the first logical channel, the assistance information for the receiver node processing the PDU set corresponding to the first service, or the assistance information for the receiver node processing the PDU set with the first priority, etc.

FIG. 4 is a second flowchart diagram of a method for PDU set transmission according to an embodiment of the present application. The method is performed by a second communication node. As shown in FIG. 4, the method includes the following steps.

Step 400: transmitting assistance information for a receiver node processing a PDU set to a first communication node.

In an embodiment, the first communication node may be a transmitting node, that is, a communication node that transmits a PDU set. For example, the transmitting node may include a terminal, an access network node (such as a base station), a DU of the access network node, etc.

In an optional embodiment, the first communication node may also be a communication node that performs configuration or scheduling on a transmitting node transmitting a PDU set. For example, in case that the transmitting node is a terminal, the first communication node may include an access network node that performs configuration or scheduling on the terminal transmitting a PDU set. The access network node may obtain assistance information for the receiver node processing the PDU set, and process the PDU set based on the assistance information for the receiver node processing the PDU set.

In an embodiment, the receiver node may include a terminal, an access network node, a core network node, an application layer or an application layer server, etc.

In the embodiment of the present application, the second communication node may transmit assistance information for the receiver node processing the PDU set to the first communication node. The assistance information may be some relevant information for the receiver node processing the PDU set, and is not limited here. Therefore, the first communication node may perform appropriate PDU set transmission processing in combination with the assistance information for the receiver node processing the PDU set when transmitting the PDU set to the receiver node (or scheduling or configuring the transmitting node transmitting the PDU set) based on the received assistance information (such as a capability to recover the PDU set based on association between the PDUs in the PDU set or an requirement for duration of receiving the entire PDU set, etc.).

The second communication node may be a receiver node or other communication nodes other than the first communication node and the receiver node.

In an embodiment, the second communication node may include a terminal, an access network node, a core network node, or a CU of the access network node, etc.

For example, the terminal transmits a PDU set to an access network node, a core network node, an application layer or an application layer server, and the terminal receives assistance information for the receiver node processing the PDU set transmitted from the access network node or the core network node.

For example, the terminal transmits a PDU set to an access network node, a core network node, an application layer or an application layer server, and the access network node receives assistance information for the receiver node processing the PDU set transmitted from the terminal or the core network node.

For example, the access network node transmits a PDU set to a terminal, and the access network node receives assistance information for the receiver node processing the PDU set transmitted from the terminal or the core network node.

For example, the DU of the access network node transmits a PDU set to a terminal, a core network node, other DU nodes, a CU node or an application layer server, and the DU of the access network node receives assistance information for the receiver node processing the PDU set transmitted from the central unit CU of the access network node.

In an embodiment of the present application, the first communication node may process the PDU set based on the assistance information for the receiver node processing the PDU set. Processing the PDU set may include one or more of the following: configuring transmission of the PDU set, scheduling transmission of the PDU set, discarding the PDU set, assigning a priority to the PDU set, and processing the PDU set based on the priority of the PDU set.

In an embodiment, the receiver node processing the PDU set includes one or more of the following: configuring transmission of the PDU set, scheduling transmission of the PDU set, discarding the PDU set, assigning a priority to the PDU set, and processing the PDU set based on the priority of the PDU set.

In an embodiment, the assistance information for the receiver node processing the PDU set may include one or more of the following.
(1) In case that all PDUs in the PDU set are correctly received, the receiver node uses information included in the PDU set.
   For example, in case that the access network node transmits a PDU set to the terminal, and the access network node learns that "the terminal may use the information included in the PDU set only if all PDUs in the PDU set are correctly received", the access network node may configure a link with a good signal quality and a low bit error rate for link transmitting the corresponding PDU set, or increase a priority of transmitting the PDU set, to ensure that the corresponding PDU set may be correctly and timely transmitted to the terminal.
(2) In case that a first ratio of PDUs in the PDU set are correctly received, the receiver node recovers the PDU set based on the correctly received PDUs. Alternatively, in case that more than the first ratio of PDUs in the PDU set are not correctly received, the receiver node does not recover the PDU set.

For example, in case that the access network node transmits a PDU set to the terminal, and the access network node learns that "in case that x% (x is an integer greater than 1 and less than or equal to 100) of PDUs in the PDU set are correctly received, the terminal may recover the PDU set based on the correctly received PDUs", the access network node may configure a link or a transmission mode with an accuracy rate higher than or equal to x% for the corresponding PDU set, to ensure that the terminal may use the information included in the PDU set. Alternatively, in case that the access network node finds that more than (1-x%) of the PDUs in the corresponding PDU set are not correctly transmitted to the terminal, the access network node would consider that it is useless to continue to transmit the PDU set, and may not continue to transmit the PDU set to the terminal. Furthermore, the access network node may discard the PDU set to save transmission resources and improve utilization efficiency of transmission resources.

For example, in case that the access network node transmits a PDU set to the terminal, and the access network node learns that "in case that more than x% (x is an integer greater than 1 and less than or equal to 100) of the PDUs in the PDU set are not correctly received, the terminal cannot recover the PDU set", the access network node may configure a link or a transmission mode with an accuracy rate greater than or equal to (1-x%) for the corresponding PDU set, to ensure that the terminal may use the information included in the PDU set. Alternatively, in case that the access network node finds that more than x% of the PDUs in the corresponding PDU set are not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(3) In case that a first quantity of PDUs in the PDU set are correctly received, the receiver node recovers the PDU set based on the correctly received PDUs. Alternatively, in case that more than the first quantity of PDUs in the PDU set are not correctly received, the receiver node does not recover the PDU set.

For example, in case that the access network node transmits a PDU set to the terminal, and the access network node learns that "in case that k (k is an integer greater than or equal to 1) PDUs in the PDU set are correctly received, the terminal may recover the PDU set based on the correctly received PDUs", the access network node may configure a link or a transmission mode with a corresponding accuracy for the corresponding PDU set, to ensure that the terminal may use the information included in the PDU set. Alternatively, in case that the access network node finds that there are more than (K-k) PDUs in the corresponding PDU set that are not correctly transmitted to the terminal (K represents a total quantity of PDUs in the PDU set), the access network node would consider that it is useless to continue to transmit the PDU set, and may not continue to transmit the PDU set to the terminal. Furthermore, the access network node may discard the PDU set to save transmission resources and improve the utilization efficiency of transmission resources.

For example, in case that the access network node transmits a PDU set to the terminal, and the access network node learns that "in case that more than k (k is an integer greater than or equal to 1) PDUs in the PDU set are not correctly received, the terminal cannot recover the PDU set", the access network node may configure a link or a transmission mode with a corresponding accuracy for the corresponding PDU set, to ensure that the terminal may use the information included in the PDU set. Alternatively, in case that the access network node finds that more than k PDUs in the corresponding PDU set are not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(4) In case that a front second quantity of PDUs in the PDU set are correctly received, the receiver node recovers the PDU set based on the correctly received PDUs.

For example, in case that the access network node transmits a PDU set to the terminal, and the access network node learns that "in case that front n (n is an integer greater than or equal to 1) PDUs in the PDU set are correctly received, the terminal may recover the PDU set based on the correctly received PDUs", the access network node may assign a scheduling priority of the front n PDUs in the corresponding PDU set to be high, and prioritize to schedule transmission of these PDUs. Alternatively, in case that the access network node finds that at least one of the front n PDUs in the corresponding PDU set is not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(5) In case that a front second ratio of PDUs in the PDU set are correctly received, the receiver node recovers the PDU set based on the correctly received PDUs.

For example, in case that the access network node transmits a PDU set to the terminal, and the access network node learns that "in case that front y% (y is an integer greater than 1 and less than or equal to 100) PDUs in the PDU set are correctly received, the terminal may recover the PDU set based on the correctly received PDUs", the access network node may assign a scheduling priority of the front y% PDUs in the corresponding PDU set to high, and prioritize to schedule transmission of these PDUs. Alternatively, in case that the access network node finds that at least one of the front y% PDUs in the corresponding PDU set is not correctly transmitted to the terminal, the access network node would consider that it is useless to continue to transmit the PDU set, and may not continue to transmit the PDU set to the terminal. Furthermore, the access network node may discard the PDU set to save transmission resources and improve the utilization efficiency of transmission resources.

(6) A maximum duration for the receiver node receiving the PDU set starting from reception of a first PDU in the PDU set.

For example, in case that the access network node transmits a PDU set to the terminal, and the access network node learns that "a maximum duration for a receiver node receiving the PDU set starting from reception of a first PDU in the PDU set is T (T is only an example here, and its value is not limited)", when the access network node schedules a corresponding downlink PDU set, it is necessary to be ensured that all PDUs in the downlink PDU set are transmitted to the terminal within time T. Alternatively, in case that the entire downlink PDU set is not transmitted to the terminal within time T, the access network node considers that it is useless to continue to transmit the PDU set, and may not continue to transmit the PDU set to the terminal. Furthermore, the access network node may discard the PDU set to save transmission resources and improve the utilization efficiency of transmission resources.

In the method for PDU set transmission provided by the embodiment of the present application, the second communication node may transmit the assistance information for the receiver node processing the PDU set to the first communication node. Therefore, when the first communication node transmits the PDU set to the receiver node, or when scheduling or configuring the transmitting node transmitting the PDU set, the second communication node may combine the assistance information for the receiver node processing the PDU set, to perform appropriate PDU set transmission processing, thereby ensuring that the corresponding PDU set may be correctly and timely transmitted to the receiver, or terminating the transmission of the PDU set in time, so that transmission resources are saved, and utilization efficiency of transmission resources is improved.

In an embodiment, transmitting the assistance information for the receiver node processing the PDU set to the first communication node includes:
transmitting the assistance information for the receiver node processing the PDU set to the first communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
receiving a first request message transmitted from the first communication node, where the first request message is used to request the assistance information for the receiver node processing the PDU set; and transmitting the assistance information for the receiver node processing the PDU set to the first communication node based on the first request message.

In an embodiment, the second communication node transmits the assistance information for the receiver node processing the PDU set to the first communication node, which may be actively transmitted from the second communication node to the first communication node, or may be transmitted from the second communication node based on a request of the first communication node.

In an embodiment, the second communication node may transmit the assistance information for the receiver node processing the PDU set to the first communication node during a procedure of establishing a PDU session, a QoS flow, a bearer or a logical channel corresponding to the PDU set (the PDU set refers to the PDU set transmitted to the receiver node), and/or during a procedure of modifying a PDU session, a QoS flow, a bearer or a logical channel corresponding to the PDU set. For example, the second communication node may transmit the assistance information for the receiver node processing the PDU set to the first communication node by carrying the assistance information for the receiver node processing the PDU set in an interactive message between the first communication node during the procedures of establishing and/or the modifying the PDU session, the QoS flow, the bearer or the logical channel.

In an embodiment, the first communication node may transmit a first request message to the second communication node, to request the second communication node to transmit the assistance information for the receiver node processing the PDU set. The second communication node transmits the assistance information for the receiver node processing the PDU set to the first communication node based on the first request message.

In an embodiment, the first request message may be used to request one or more of the following.
(1) Assistance information for the receiver node processing a first PDU set.
   The first PDU set refers to a certain part of a PDU set, or refers to a specified PDU set. For example, the first communication node may request assistance information for the receiver node processing a certain or some PDU sets, to properly process the transmission of the PDU set.
(2) Assistance information for the receiver node processing a first type of PDU set.
   The first type of PDU set refers to a certain part of a PDU set, or refers to a specified type of PDU set. For example, the first communication node may request assistance information for the receiver node processing a certain or some types of PDU sets, to properly process the transmission of the type of PDU set.
(3) Assistance information for the receiver node processing a PDU set corresponding to a first PDU session.
   The PDU set corresponding to the first PDU session refers to a PDU set corresponding to a certain part of a PDU session, or refers to a PDU set corresponding to a specified PDU session. For example, the first communication node may request assistance information for the receiver node processing a PDU set corresponding to a certain or some PDU sessions, to properly process the transmission of the PDU set corresponding to the PDU session.
(4) Assistance information for the receiver node processing a PDU set corresponding to a first QoS flow.
   The PDU set corresponding to the first QoS flow refers to a PDU set corresponding to a certain part of a QoS flow, or refers to a PDU set corresponding to a specified QoS flow. For example, the first communication node may request assistance information for the receiver node processing a PDU set corresponding to a certain or some QoS flows, to properly process the transmission of the PDU set corresponding to the QoS flow.
(5) Assistance information for the receiver node processing a PDU set corresponding to a first bearer or a first logical channel.
   The PDU set corresponding to the first bearer or the first logical channel refers to a PDU set corresponding to a certain part of a bearer or a certain part of a logical channel, or refers to a PDU set corresponding to a specified bearer or a specified logical channel. For example, the first communication node may request assistance information for the receiver node processing the PDU set corresponding to a certain or some bearers or a certain or some logical channels, to properly process the transmission of the PDU set corresponding to the bearer or the logical channel.
(6) Assistance information for the receiver node processing a PDU set corresponding to a first service.
   The PDU set corresponding to the first service refers to a PDU set corresponding to a certain part of a service, or refers to a PDU set corresponding to a specified service. For example, the first communication node may request assistance information for the receiver node processing a PDU set corresponding to a certain or some services, to properly process the transmission of the PDU set corresponding to the service.
(7) Assistance information for the receiver node processing a PDU set with a first priority.

The PDU set of the first priority refers to a PDU set with a certain part of a priority, or refers to a PDU set with a specified priority. For example, the first communication node may request assistance information for the receiver node processing a PDU set with a certain or some priorities, to properly process the transmission of the PDU set with the priority.

It should be noted that, in case that the second communication node actively transmits the assistance information for the receiver node processing the PDU set to the first communication node, the assistance information for the receiver node processing the PDU set may also include one or more of the above (1) - (7). For example, the second communication node may transmit, to the first communication node, the assistance information for the receiver node processing the first PDU set, the assistance information for the receiver node processing the first type of PDU set, the assistance information for the receiver node processing the PDU set corresponding to the first PDU session, the assistance information for the receiver node processing the PDU set corresponding to the first QoS flow, the assistance information for the receiver node processing the PDU set corresponding to the first bearer or the first logical channel, the assistance information for the receiver node processing the PDU set corresponding to the first service, or the assistance information for the receiver node processing the PDU set with the first priority, etc.

The methods provided by each embodiment of the present application are based on the same application concept, implementation of each method may be referred to each other, and the repetitions are not repeated.

The following examples of the methods provided in each of the above embodiments of the present application are used to illustrate the methods provided by the above embodiments of the present application.

Embodiment 1: an RAN node is taken as a transmitter for a PDU set. Assistance information is directly obtained from a UE (i.e., assistance information for the UE processing a PDU set).
1. The UE transmits its "assistance information for the UE processing the PDU set" to the RAN node.

When to transmit:
a. The UE may transmit the assistance information for the UE processing the PDU set to the RAN node when a PDU session, a QoS flow, a bearer or a logical channel corresponding to the PDU set are established and/or modified. For example, when the UE receives a radio resource control (RRC) reconfiguration message and successfully establishes a bearer or a logical channel corresponding to a certain PDU set, "assistance information for processing the PDU set" may be carried in a RRC reconfiguration complete message transmitted to the RAN node.
b. The UE transmits the assistance information for processing the PDU set to the RAN node based on a request of the RAN node. For example, in case that the RAN node wants to enhance transmitting of the PDU set based on its own algorithm, the RAN node transmits a request to the UE to obtain the assistance information for the UE processing the PDU set.

Furthermore, the RAN node may request assistance information for the UE processing a certain PDU set.

Alternatively, the RAN node may request assistance information for the UE processing a certain type of PDU set. For example, the PDU set may transmit an intra frame (I frame), a bi-directional frame (B frame) or a predicted frame (P frame), where the I frame is the least compressible frame that may be decoded independently, the P frame may be decompressed from a previous frame, and is more compressible than the I frame; and the B frame may use both previous and forward frames to obtain the highest amount of data compression. The RAN node may request assistance information for the UE processing the PDU set corresponding to the I frame.

Alternatively, the RAN node may request assistance information for the UE processing a PDU set corresponding to a certain PDU session. For example, the RAN node may request assistance information for the UE processing a PDU set corresponding to PDU session ID1.

Alternatively, the RAN node may request assistance information for the UE processing a PDU set corresponding to a certain QoS flow. For example, the RAN node may request assistance information for the UE processing a PDU set corresponding to QFI1 (QoS Flow Identifier 1).

Alternatively, the RAN node may request assistance information for the UE processing a PDU set corresponding to a certain bearer or a certain logical channel. For example, the RAN node may request assistance information for a PDU set corresponding to a data radio bearer (DRB) id=1 or a logical channel id=2.

Alternatively, the RAN node may request assistance information for the UE processing a PDU set corresponding to a certain service. For example, the RAN node may request assistance information for the UE processing a PDU set corresponding to a current XR service.

Alternatively, the RAN node may request assistance information for the UE processing a PDU set of a certain priority (it is assumed that PDU sets have different priorities or different important levels). For example, the RAN node may request assistance information for the UE processing a PDU set corresponding to a PDU set with a priority of 1.

After receiving the request, the UE feeds back an associated result to the RAN node.

"Assistance information for processing a PDU set" of the UE may be one or more of the following.
(1) The UE may use information included in the PDU set only after all PDUs in the PDU set are correctly received.
(2) In case that x% of the PDUs in a PDU set are correctly received, the UE may still recover the PDU set even if some PDUs are lost; or in case that more than x% of the PDUs in a PDU set are not received correctly, the UE cannot recover the PDU set.
(3) In case that k PDUs in a PDU set are correctly received, the UE may still recover the PDU set even if some PDUs are lost; or in case that more than k PDUs in a PDU set are not received correctly, the UE cannot recover the PDU set.
(4) In case that front n PDUs in a PDU set are correctly received, the UE may still recover the PDU set even if some PDUs are lost.
(5) In case that front y% PDUs in a PDU set are correctly received, the UE may still recover the PDU set even if some PDUs are lost.
(6) Maximum time (T) for the UE receiving the PDU set starting from reception of a first PDU in the PDU set.

2. The RAN node receives "assistance information for the UE processing the PDU set". When transmitting the corresponding PDU set, the RAN node performs appropriate transmission processing in combination with the assistance information.

For example, in case that "the UE may use the information included in the PDU set only if all PDUs in the PDU set are correctly received", the RAN node configures a link with a good signal quality and a low bit error rate for a link transmitting the PDU set, or increases a priority of transmitting the PDU set, to ensure that the corresponding PDU set may be correctly and timely transmitted to the receiver.

For example, in case that "in case that x% of the PDUs in a PDU set are correctly received, the UE may still recover the PDU set even if some PDUs are lost", if the RAN node finds that more than (1-x%) PDUs in a PDU set are not correctly transmitted to a peer end, the RAN node considers that it is useless to continue to transmit the PDU set, and would not continue to transmit the PDU set to the UE. Furthermore, the RAN node discards the PDU set.

For example, in case that "in case that x% of the PDUs in a PDU set are correctly received, the UE may still recover the PDU set even if some PDUs are lost", the RAN node would configure a link or a transmission mode with an accuracy rate higher than or equal to x% for the PDU set.

For example, in case that "in case that front n PDUs in a PDU set are correctly received, the UE may still recover the PDU set even if some PDUs are lost", the RAN node would assign a scheduling priority of the front n PDUs in the PDU set to be high, and prioritize to schedule the transmission of these PDUs.

For example, the RAN node may schedule a downlink PDU set based on "the maximum time (T) for the UE receiving the PDU set starting from reception of the first PDU set in the PDU set". When scheduling the downlink PDU set, it is necessary to ensure that all PDUs in the downlink PDU set are transmitted to the UE within time T; or in case that the entire downlink PDU set is not transmitted to the UE within time T, the RAN node considers that it is useless to continue to deliver the PDU set, and would not continue to transmit the PDU set to the UE. Furthermore, the RAN node discards the PDU set.

Embodiment 2: an RAN node is taken as a transmitter for a PDU set. Assistance information (assistance information for a UE processing the PDU set) is obtained from a core network node.
1. The core network node transmits the "assistance information for the UE processing the PDU set" to the RAN node.

When to transmit:
a. The core network node may transmit the assistance information for the UE processing the PDU set to the RAN node when a PDU session and a QoS flow corresponding to the PDU set between the UE and the core network node are established and/or modified.
b. The core network node transmits the assistance information for the UE processing the PDU set to the RAN node based on a request of the RAN node. For example, in case that the RAN node wants to enhance transmitting of the PDU set based on its own algorithm, the RAN node transmits a request to the core network node to obtain the assistance information for the UE processing the PDU set.

Furthermore, the RAN node may request assistance information for the UE processing a certain PDU set.

Alternatively, the RAN node may request assistance information for the UE processing a certain type of PDU set.

Alternatively, the RAN node may request assistance information for the UE processing a PDU set corresponding to a certain PDU session.

Alternatively, the RAN node may request assistance information for the UE processing a PDU set corresponding to a certain QoS flow.

Alternatively, the RAN node may request assistance information for the UE processing a PDU set corresponding to a certain bearer or a logical channel.

Alternatively, the RAN node may request assistance information for the UE processing a PDU set corresponding to a certain service.

Alternatively, the RAN node may request assistance information for the UE processing a PDU set with a certain priority (it is assumed that PDU sets have different priorities or different important levels).

After receiving the request, the core network node feeds back an associated result to the RAN node.

"Assistance information for processing a PDU set" of the UE may be one or more of the following.
(1) The UE may use information included in the PDU set only after all PDUs in the PDU set are correctly received.
(2) In case that x% of the PDUs in a PDU set are correctly received, the UE may still recover the PDU set even if some PDUs are lost; or in case that more than x% of the PDUs in a PDU set are not received correctly, the UE cannot recover the PDU set.
(3) In case that k PDUs in a PDU set are correctly received, the UE may still recover the PDU set even if some PDUs are lost; or in case that more than k PDUs in a PDU set are not received correctly, the UE cannot recover the PDU set.
(4) In case that front n PDUs in a PDU set are correctly received, the UE may still recover the PDU set even if some PDUs are lost.
(5) In case that front y% PDUs in a PDU set are correctly received, the UE may still recover the PDU set even if some PDUs are lost.
(6) Maximum time (T) for the UE receiving the PDU set starting from reception of a first PDU in the PDU set.

In an embodiment, before the core network node transmits the "assistance information for the UE processing the PDU set" to the RAN node, the core network node obtains the "assistance information for the UE processing the PDU set" from the UE or an application layer server.

2. The RAN node receives "assistance information for the UE processing the PDU set". When transmitting the corresponding PDU set, the RAN node performs appropriate transmission processing in combination with the assistance information.

For example, in case that "the UE may use the information included in the PDU set only when all PDUs in the PDU set are correctly received", the RAN node configures a link with a good signal quality and a low bit error rate for a link transmitting the PDU set, or increases a priority of transmitting the PDU set, to ensure that the corresponding PDU set may be correctly and timely transmitted to the receiver.

For example, in case that "in case that x% of the PDUs in a PDU set are correctly received, the UE may still recover the PDU set even if some PDUs are lost", if the RAN node finds that more than (1-x%) PDUs in a PDU set are not correctly transmitted to a peer end, the RAN node considers that it is useless to continue to transmit the PDU set, and would not continue to transmit the PDU set to the UE. Furthermore, the RAN node discards the PDU set.

For example, in case that "in case that x% of the PDUs in a PDU set are correctly received, the UE may still recover the PDU set even if some PDUs are lost", the RAN node would configure a link or a transmission mode with an accuracy rate higher than or equal to x% for the PDU set.

For example, in case that "in case that front n PDUs in a PDU set are correctly received, the UE may still recover the PDU set even if some PDUs are lost", the RAN node would set a scheduling priority of the front n PDUs in the PDU set to be high, and prioritize to schedule the transmission of these PDUs.

For example, the RAN node may schedule a downlink PDU set based on "the maximum time (T) for the UE receiving the PDU set starting from reception of the first PDU set in the PDU set". When scheduling the downlink PDU set, it is necessary to ensure that all PDUs in the downlink PDU set are delivered to the UE within time T; or in case that the entire downlink PDU set is not delivered to the UE within time T, the RAN node considers that it is useless to continue to deliver the PDU set, and would not continue to transmit the PDU set to the UE. Furthermore, the RAN node discards the PDU set.

Example 3: a UE is taken as a transmitter for a PDU set. Assistance information (assistance information for a core network node or a RAN node processing the PDU set) is obtained by the UE from the core network node or the RAN node.
1. The core network node or the RAN node transmits its "assistance information for processing the PDU set" to the UE respectively.

When to transmit:
a. The assistance information for processing the PDU set may be transmitted to the UE when a PDU session, a QoS flow, a bearer or a logical channel corresponding to the PDU set between the core network node or the RAN node and the UE are established and/or modified.
b. The core network node or the RAN node transmits the assistance information for processing the PDU set to the UE based on a request of the UE.

Furthermore, the UE may request assistance information for the core network node or the RAN node processing a certain PDU set.

Alternatively, the UE may request assistance information for the core network node or the RAN node processing a certain type of PDU set.

Alternatively, the UE may request assistance information for the core network node or the RAN node processing a PDU set corresponding to a certain PDU session.

Alternatively, the UE may request assistance information for the core network node or the RAN node processing a PDU set corresponding to a certain QoS flow.

Alternatively, the UE may request assistance information for the core network node or the RAN node processing a PDU set corresponding to a certain bearer or a logical channel.

Alternatively, the UE may request assistance information for the core network node or the RAN node processing a PDU set corresponding to a certain service.

Alternatively, the UE may request assistance information for the core network node or the RAN node processing a PDU set with a certain priority (it is assumed that PDU sets have different priorities or different important levels).

After receiving the request, the core network node or the RAN node feeds back an associated result to the UE.

"Assistance information for the core network node or the RAN node processing the PDU set" may be one or more of the following:
(1) The core network node or RAN node may use information included in the PDU set only after all PDUs in the PDU set are correctly received.
(2) In case that x% of the PDUs in the PDU set are correctly received, the core network node or the RAN node may still recover the PDU set even if some PDUs are lost; or in case that more than x% of the PDUs in the PDU set are not correctly received, the core network node or the RAN node cannot recover the PDU set.
(3) In case that k PDUs in a PDU set are correctly received, the core network node or the RAN node may still recover the PDU set even if some PDUs are lost; or in case that more than k PDUs in a PDU set are not correctly received, the core network node or the RAN node cannot recover the PDU set.
(4) In case that front n PDUs in a PDU set are correctly received, the core network node or the RAN node may still recover the PDU set even if some PDUs are lost.
(5) In case that front y% PDUs in a PDU set are correctly received, the core network node or the RAN node may still recover the PDU set even if some PDUs are lost.
(6) Maximum time (T) for the core network node or the RAN node receiving the PDU set starting from reception of a first PDU in the PDU set.

2. The UE receives the "assistance information for the core network node or the RAN node processing the PDU set". When transmitting the corresponding PDU set, the UE performs appropriate transmission processing in combination with the assistance information.

For example, in case that "the core network node or RAN node may use information included in the PDU set only after all PDUs in the PDU set are correctly received", if the UE finds that a PDU in the PDU set is not correctly received, the UE considers that it is useless to continue to transmit the PDU set, and would not continue to transmit the PDU set to the core network node or the RAN node. Furthermore, the UE discards the PDU set.

For example, in case that "in case that x% of the PDUs in the PDU set are correctly received, the core network node or the RAN node may still recover the PDU set even if some PDUs are lost", if the UE finds that more than (1-x%) of the PDUs in a PDU set are not correctly transmitted to a peer end, the UE considers that it is useless to continue to transmit the PDU set, and would not continue to transmit the PDU set to the peer end. Furthermore, the UE discards the PDU set.

For example, in case that "in case that front y% PDUs in a PDU set are correctly received, the core network node or the RAN node may still recover the PDU set even if some PDUs are lost", the UE assigns a higher priority to y% PDUs in the PDU set. When the UE is configured with an uplink grant, the UE prioritizes to provide guaranteed transmission for these PDUs.

For example, the UE may be based on "the maximum time (T) for the core network node or the RAN node receiving the PDU set starting from reception of the first PDU set in the PDU set". When the entire uplink PDU set is not transmitted within time T, the UE considers that it is useless to continue to transmit the PDU set, and would not continue to transmit the PDU set to the core network node or the RAN node. Furthermore, the UE discards the PDU set.

Example 4: a UE is taken as a transmitter for a PDU set. The RAN node obtains assistance information (assistance information for an application layer or an application layer server processing the PDU set) from a core network node or UE.
1. The core network node or the UE transmits the "assistance information for the application layer or the application layer server processing the PDU set" to the RAN node.

When to transmit:
a. The assistance information for processing the PDU set may be transmitted to the RAN node when a PDU session, a QoS flow, a bearer or a logical channel corresponding to the PDU set are established and/or modified.
b. The core network node or the UE transmits the assistance information for processing the PDU set to the RAN node based on a request of the RAN node.

Furthermore, the RAN node may request assistance information for the application layer or the application layer server processing a certain PDU set.

Alternatively, the RAN node may request assistance information for the application layer or the application layer server processing a certain type of PDU set.

Alternatively, the RAN node may request assistance information for the application layer or the application layer server processing a PDU set corresponding to a certain PDU session.

Alternatively, the RAN node may request assistance information for the application layer or the application layer server processing a PDU set corresponding to a certain QoS flow.

Alternatively, the RAN node may request assistance information for the application layer or the application layer server processing a PDU set corresponding to a certain bearer or a logical channel.

Alternatively, the RAN node may request assistance information for the application layer or the application layer server processing a PDU set of a certain service.

Alternatively, the RAN node may request assistance information for the application layer or the application layer server processing a PDU set with a certain priority (it is assumed that PDU sets have different priorities or different important levels).

After receiving the request, the core network node or UE feeds back an associated result to the RAN node.

"Assistance information for the application layer or the application layer server processing the PDU set" may be one or more of the following.
(1) The application layer or application layer server may use information included in the PDU set only after all PDUs in the PDU set are correctly received.
(2) In case that x% of the PDUs in the PDU set are correctly received, the application layer or the application layer server may still recover the PDU set even if some PDUs are lost; or in case that more than x% of the PDUs in the PDU set are not correctly received, the application layer or the application layer server cannot recover the PDU set.
(3) In case that k PDUs in a PDU set are correctly received, the application layer or the application layer server may still recover the PDU set even if some PDUs are lost; or in case that more than k PDUs in a PDU set are not received correctly, the application layer or the application layer server cannot recover the PDU set.
(4) In case that front n PDUs in a PDU set are correctly received, the application layer or the application layer server may still recover the PDU set even if some PDUs are lost.
(5) In case that front y% PDUs in a PDU set are correctly received, the application layer or the application layer server may still recover the PDU set even if some PDUs are lost.
(6) Maximum time (T) for the application layer or the application layer server receiving the PDU set starting from reception of a first PDU in a PDU set.

2. The RAN node receives the "assistance information for processing the PDU set" from the application layer or the application layer server, and the RAN node performs appropriate transmission processing on the UE transmitting the corresponding PDU set in combination with the assistance information.

For example, in case that "in case that x% of the PDUs in the PDU set are correctly received, the application layer or the application layer server may still recover the PDU set even if some PDUs are lost", the RAN node would configure a link or a transmission mode with an accuracy rate higher than or equal to x% for the PDU set.

For example, the RAN node needs to ensure that all PDUs in an uplink PDU set are transmitted within time T when scheduling the uplink PDU set based on "the maximum time (T) for the application layer or the application layer server receiving the PDU set starting from reception of the first PDU in the PDU set".

Example 5: a DU node is taken as a transmitter for a PDU set. Assistance information (assistance information for a receiver processing the PDU set, where the receiver is a UE, a core network node, other DU nodes, a CU node, an application layer server, etc.) is obtained from the CU node.
1. The CU node transmits the "assistance information for the receiver processing the PDU set" to the DU node.

When to transmit:
a. The assistance information for processing the PDU set may be transmitted to the DU node when a PDU session, a QoS flow, a bearer or a logical channel corresponding to the PDU set are established and/or modified.
b. The CU node transmits the assistance information for processing the PDU set to the DU node based on a request of the DU node.

Furthermore, the DU node may request assistance information for the receiver processing a certain PDU set.

Alternatively, the DU node may request assistance information for the receiver processing a certain type of PDU set.

Alternatively, the DU node may request assistance information for the receiver processing a PDU set corresponding to a certain PDU session.

Alternatively, the DU node may request assistance information for the receiver processing a PDU set corresponding to a certain QoS flow.

Alternatively, the DU node may request assistance information for the receiver processing a PDU set corresponding to a certain bearer or a logical channel.

Alternatively, the DU node may request assistance information for the receiver processing a PDU set corresponding to a certain service.

Alternatively, the DU node may request assistance information for the receiver processing a PDU set with a certain priority (it is assumed that PDU sets have different priorities or different important levels).

After receiving the request, the CU node feeds back an associated result to the DU node.

"Assistance information for the receiver processing the PDU set" may be one or more of the following.
(1) The receiver may use information included in the PDU set only after all PDUs in the PDU set are correctly received.
(2) In case that x% of the PDUs in the PDU set are correctly received, the receiver may still recover the PDU set even if some PDUs are lost; or in case that more than x% of the PDUs in the PDU set are not correctly received, the receiver cannot recover the PDU set.
(3) In case that k PDUs in the PDU set are correctly received, the receiver may still recover the PDU set even if some PDUs are lost; or in case that more than k PDUs in the PDU set are not correctly received, the receiver cannot recover the PDU set.
(4) In case that front n PDUs in the PDU set are correctly received, the receiver may still recover the PDU set even if some PDUs are lost.
(5) In case that front y% PDUs in a PDU set are correctly received, the receiver may still recover the PDU set even if some PDUs are lost.
(6) Maximum time (T) for the receiver receiving the PDU set starting from reception of a first PDU in a PDU set.

2. The DU node receives the "assistance information for the receiver processing the PDU set". When transmitting the corresponding PDU set, the DU node performs appropriate transmission processing in combination with the assistance information.

For example, in case that "the receiver may use information included in the PDU set only after all PDUs in the PDU set are correctly received", if the DU node finds that a certain PDU in the PDU set is not received correctly, the DU node considers that it is useless to continue to transmit the PDU set, and would not continue to transmit the PDU set to the receiver. Furthermore, the DU node discards the PDU set.

For example, in case that "in case that x% of the PDUs in the PDU set are correctly received, the receiver may still recover the PDU set even if some PDUs are lost", if the DU node finds that more than (1-x%) PDUs in a PDU set are not correctly transmitted to the peer, the DU node considers that it is useless to continue to transmit the PDU set, and would not continue to transmit the PDU set to a peer end. Furthermore, the DU node discards the PDU set.

For example, in case that "in case that front y% PDUs in a PDU set are correctly received, the receiver may still recover the PDU set even if some PDUs are lost", the DU node increases a priority of y% of PDUs in the PDU set, and prioritizes to provide guaranteed transmission for these PDUs first.

For example, the DU node may be based on "the maximum time (T) for the receiver receiving the PDU set starting from reception of the first PDU set in the received PDU set". When the entire PDU set is not transmitted within the time T, the DU node considers that it is useless to continue to transmit the PDU set, and would not continue to transmit the PDU set to the receiver. Furthermore, the DU node discards the PDU set.

The methods and apparatuses provided by various embodiments of the present application are based on the same application concept. Since the principles of solving problems by the methods and apparatuses are similar, implementation of the apparatuses and methods may be referred to each other, and the repetitions are not repeated.

FIG. 5 is a structural schematic diagram of a first communication node according to an embodiment of the present application. As shown in FIG. 5, a first communication node includes a memory 520, a transceiver 510 and a processor 500, where the processor 500 and the memory 520 may also be physically separated.

The memory 520 is used for storing a computer program, and the transceiver 510 is used for receiving and transmitting data under control of the processor 500.

In an embodiment, the transceiver 510 is used for receiving and transmitting data under the control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 510 may include multiple elements, i.e., including a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a central processing unit (CPU), an application specific integrated circuit (ASIC), a field programmable gate array (FPGA) or a complex programmable logic device (CPLD), and the processor 500 may also adopt a multi-core architecture.

The processor 500 calls the computer program stored in the memory 520 to perform any of the methods provided by the embodiments of the present application according to an obtained executable instruction, for example: obtaining assistance information for a receiver node processing a PDU set; and transmitting the PDU set based on the assistance information for the receiver node processing the PDU set.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, the receiver node processing the PDU set includes one or more of the following:
configuring transmission of the PDU set, scheduling transmission of the PDU set, discarding the PDU set, assigning a priority to the PDU set, and processing the PDU set based on the priority of the PDU set.

In an embodiment, obtaining the assistance information for the receiver node processing the PDU set includes:
receiving the assistance information for the receiver node processing the PDU set transmitted from a second communication node.

In an embodiment, receiving the assistance information for the receiver node processing the PDU set transmitted from the second communication node includes:
receiving the assistance information for the receiver node processing the PDU set transmitted from the second communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
transmitting a first request message to the second communication node, where the first request message is used to request the assistance information for the receiver node processing the PDU set; and receiving the assistance information for the receiver node processing the PDU set transmitted from the second communication node.

In an embodiment, the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set with a first priority.

In an embodiment, the first communication node includes a terminal, and receiving the assistance information for the receiver node processing the PDU set transmitted from the second communication node includes:
receiving the assistance information for the receiver node processing the PDU set transmitted from an access network node or a core network node.

In an embodiment, the first communication node includes an access network node, and receiving the assistance information for the receiver node processing the PDU set transmitted from the second communication node includes:
receiving the assistance information for the receiver node processing the PDU set transmitted from a terminal or a core network node.

In an embodiment, the first communication node includes a distributed unit of an access network node, and receiving the assistance information for the receiver node processing the PDU set transmitted from the second communication node includes:
receiving the assistance information for the receiver node processing the PDU set transmitted from a central unit of the access network node.

In an embodiment, the receiver node includes a terminal, an access network node, a core network node, an application layer or an application layer server.

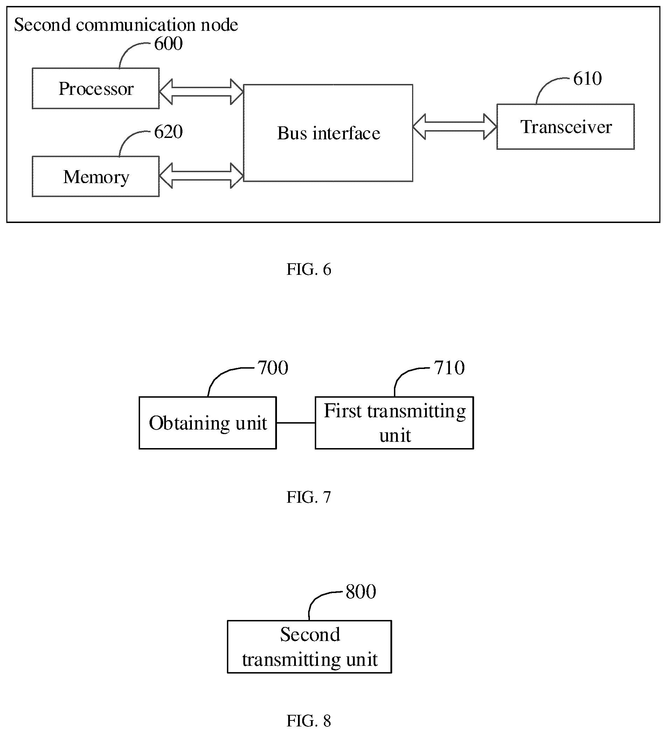

FIG. 6 is a structural schematic diagram of a second communication node according to an embodiment of the present application. As shown in FIG. 6, a second communication node includes a memory 620, a transceiver 610 and a processor 600, where the processor 600 and the memory 620 may also be physically separated.

The memory 620 is used for storing a computer program, and the transceiver 610 is used for receiving and transmitting data under control of the processor 600.

In an embodiment, the transceiver 610 is used for receiving and transmitting data under the control of the processor 600.

In FIG. 6, a bus architecture may include any number of interconnected buses and bridges, which are linked together through various circuits of one or more processors represented by the processor 600 and one or more memories represented by the memory 620. The bus architecture may also link together various other circuits, such as peripherals, voltage regulators, and power management circuits, etc., which are well known in the art, and therefore are not further described in the present application. The bus interface provides an interface. The transceiver 610 may include multiple elements, i.e., including a transmitter and a receiver, units for providing communication with various other devices over transmission media including wireless channels, wired channels, fiber optic cables, and the like.

The processor 600 is responsible for managing the bus architecture and general processing, and the memory 620 may store data used by the processor 600 when performing operations.

The processor 600 may be a CPU, an ASIC, a FPGA or a CPLD, and the processor 600 may also adopt a multi-core architecture.

The processor 600 calls the computer program stored in the memory 620 to perform any of the methods provided by the embodiments of the present application according to an obtained executable instruction, for example: transmitting assistance information for a receiver node processing a PDU set to a first communication node.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, transmitting the assistance information for the receiver node processing the PDU set to the first communication node includes:
transmitting the assistance information for the receiver node processing the PDU set to the first communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
receiving a first request message transmitted from the first communication node, where the first request message is used to request the assistance information for the receiver node processing the PDU set; and transmitting the assistance information for the receiver node processing the PDU set to the first communication node based on the first request message.

In an embodiment, the second communication node includes a terminal, an access network node, a core network node or a central unit of an access network node.

It should be noted here that the above-mentioned first communication node and the second communication node provided by the embodiments of the present application may implement all the method steps in the method embodiments and may achieve the same effect. The parts and beneficial effects of this embodiment that are the same as those of the method embodiments are not described in detail.

FIG. 7 is a first structural schematic diagram of an apparatus for PDU set transmission according to an embodiment of the present application. The apparatus may be applied to a first communication node. As shown in FIG. 7, the apparatus includes:
an obtaining unit 700, used for obtaining assistance information for a receiver node processing a PDU set; and
a first transmitting unit 710, used for transmitting the PDU set based on the assistance information for the receiver node processing the PDU set.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, the receiver node processing the PDU set includes one or more of the following:
configuring transmission of the PDU set, scheduling transmission of the PDU set, discarding the PDU set, assigning a priority to the PDU set, and processing the PDU set based on the priority of the PDU set.

In an embodiment, obtaining the assistance information for the receiver node processing the PDU set includes:
receiving the assistance information for the receiver node processing the PDU set transmitted from a second communication node.

In an embodiment, receiving the assistance information for the receiver node processing the PDU set transmitted from the second communication node includes:
receiving the assistance information for the receiver node processing the PDU set transmitted from the second communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
transmitting a first request message to the second communication node, where the first request message is used to request the assistance information for the receiver node processing the PDU set; and receiving the assistance information for the receiver node processing the PDU set transmitted from the second communication node.

In an embodiment, the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set with a first priority.

In an embodiment, receiving the assistance information for the receiver node processing the PDU set transmitted from the second communication node includes:
a terminal receives the assistance information for the receiver node processing the PDU set transmitted from an access network node or a core network node.

In an embodiment, receiving the assistance information for the receiver node processing the PDU set transmitted from the second communication node includes:
an access network mode receives the assistance information for the receiver node processing the PDU set transmitted from a terminal or a core network node.

In an embodiment, receiving the assistance information for the receiver node processing the PDU set transmitted from the second communication node includes:
a distributed unit of an access network mode receives the assistance information for the receiver node processing the PDU set transmitted from a central unit of the access network node.

In an embodiment, the receiver node includes a terminal, an access network node, a core network node, an application layer or an application layer server.

FIG. 8 is a second structural schematic diagram of an apparatus for PDU set transmission according to an embodiment of the present application. The apparatus may be applied to a second communication node. As shown in FIG. 8, the apparatus includes:
a second transmitting unit 800, used for transmitting assistance information for a receiver node processing a PDU set to a first communication node.

In an embodiment, the assistance information for the receiver node processing the PDU set includes one or more of the following:
in case that all PDUs in the PDU set are correctly received, the receiver node uses information included in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

In an embodiment, transmitting the assistance information for the receiver node processing the PDU set to the first communication node includes:
transmitting the assistance information for the receiver node processing the PDU set to the first communication node during a procedure of establishing a PDU session, a quality of service (QoS) flow, a bearer or a logical channel corresponding to the PDU set, and/or, during a procedure of modifying a PDU session, a quality of service (QoS) flow, a bearer or a logical channel corresponding to the PDU set; or
receiving a first request message transmitted from the first communication node, where the first request message is used to request the assistance information for the receiver node processing the PDU set; and transmitting the assistance information for the receiver node processing the PDU set to the first communication node based on the first request message.

In an embodiment, the second communication node includes a terminal, an access network node, a core network node or a central unit of an access network node.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above-mentioned apparatuses provided by the embodiments of the present application may implement all the method steps in the method embodiments and may achieve the same effect. The parts and beneficial effects of this embodiment that are the same as those of the method embodiments are not described in detail.

An embodiment of the present application further provides a computer-readable storage medium, where the computer-readable storage medium stores a computer program, and the computer program is used to cause a computer to perform the methods for PDU set transmission provided by the above-mentioned embodiments.

It should be noted here that the above-mentioned computer-readable storage medium provided by the embodiments of the present application may implement all the method steps in the method embodiments and may achieve the same effect. The parts and beneficial effects of this embodiment that are the same as those of the method embodiments are not described in detail.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal involved in the embodiments of the present application may be a device that provides voice and/or data connectivity to a user, a handheld device with a wireless connection function, or other processing devices connected to a wireless modem. In different systems, the names of terminals may also be different. For example, in a 5G system, the terminal may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The access network node involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The access network node may be used to interchange received air frames with Internet Protocol (IP) packets, and serve as a router between the wireless terminal device and the rest of the access network, where the rest of the access network may include an IP communication network. The access network node may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the access network node may include a CU node and a DU node, and the CU node and the DU node may also be arranged geographically separately.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for packet data unit, PDU, set transmission, performed by a first communication node, comprising:
obtaining assistance information for a receiver node processing a PDU set; and
transmitting the PDU set based on the assistance information for the receiver node processing the PDU set.

2. The method of claim 1, wherein the assistance information for the receiver node processing the PDU set comprises one or more of the following:
in case that all PDUs in the PDU set are correctly received, the receiver node uses information comprised in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

3. The method of claim 1, wherein the receiver node processing the PDU set comprises one or more of the following:
configuring transmission of the PDU set, scheduling transmission of the PDU set, discarding the PDU set, assigning a priority to the PDU set, and processing the PDU set based on the priority of the PDU set.

4. The method of claim 1 or 2, wherein obtaining the assistance information for the receiver node processing the PDU set comprises:
receiving the assistance information for the receiver node processing the PDU set transmitted from a second communication node.

5. The method of claim 4, wherein receiving the assistance information for the receiver node processing the PDU set transmitted from the second communication node comprises:
receiving the assistance information for the receiver node processing the PDU set transmitted from the second communication node during a procedure of establishing a PDU session, a quality of service, QoS, flow, a bearer or a logical channel corresponding to the PDU set, and/or, during a procedure of modifying a PDU session, a quality of service, QoS, flow, a bearer or a logical channel corresponding to the PDU set; or
transmitting a first request message to the second communication node, wherein the first request message is used to request the assistance information for the receiver node processing the PDU set; and receiving the assistance information for the receiver node processing the PDU set transmitted from the second communication node.

6. The method of claim 5, wherein the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set with a first priority.

7. The method of any one of claims 4 to 6, wherein the first communication node comprises a terminal, and receiving the assistance information for the receiver node processing the PDU set transmitted from the second communication node comprises:
receiving the assistance information for the receiver node processing the PDU set transmitted from an access network node or a core network node.

8. The method of any one of claims 4 to 6, wherein the first communication node comprises an access network node, and receiving the assistance information for the receiver node processing the PDU set transmitted from the second communication node comprises:
receiving the assistance information for the receiver node processing the PDU set transmitted from a terminal or a core network node.

9. The method of any one of claims 4 to 6, wherein the first communication node comprises a distributed unit of an access network node, and receiving the assistance information for the receiver node processing the PDU set transmitted from the second communication node comprises:
receiving the assistance information for the receiver node processing the PDU set transmitted from a central unit of the access network node.

10. The method of any one of claims 1 to 9, wherein the receiver node comprises a terminal, an access network node, a core network node, an application layer or an application layer server.

11. A method for packet data unit, PDU, set transmission, performed by a second communication node, comprising:
transmitting assistance information for a receiver node processing a PDU set to a first communication node.

12. The method of claim 11, wherein the assistance information for the receiver node processing the PDU set comprises one or more of the following:
in case that all PDUs in the PDU set are correctly received, the receiver node uses information comprised in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

13. The method of claim 11 or 12, wherein transmitting the assistance information for the receiver node processing the PDU set to the first communication node comprises:
transmitting the assistance information for the receiver node processing the PDU set to the first communication node during a procedure of establishing a PDU session, a quality of service, QoS, flow, a bearer or a logical channel corresponding to the PDU set, and/or, during a procedure of modifying a PDU session, a quality of service, QoS, flow, a bearer or a logical channel corresponding to the PDU set; or
receiving a first request message transmitted from the first communication node, wherein the first request message is used to request the assistance information for the receiver node processing the PDU set; and transmitting the assistance information for the receiver node processing the PDU set to the first communication node based on the first request message.

14. The method of any one of claims 11 to 13, wherein the second communication node comprises a terminal, an access network node, a core network node or a central unit of an access network node.

15. A first communication node, comprising a memory, a transceiver and a processor,
wherein the memory is used for storing a computer program, the transceiver is used for receiving and transmitting data under control of the processor, and the processor is used for reading the computer program in the memory and performing the following operations:
obtaining assistance information for a receiver node processing a packet data unit, PDU, set; and
transmitting the PDU set based on the assistance information for the receiver node processing the PDU set.

16. The first communication node of claim 15, wherein the assistance information for the receiver node processing the PDU set comprises one or more of the following:
in case that all PDUs in the PDU set are correctly received, the receiver node uses information comprised in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

17. The first communication node of claim 15, wherein the receiver node processing the PDU set comprises one or more of the following:
configuring transmission of the PDU set, scheduling transmission of the PDU set, discarding the PDU set, assigning a priority to the PDU set, and processing the PDU set based on the priority of the PDU set.

18. The first communication node of claim 15 or 16, wherein obtaining the assistance information for the receiver node processing the PDU set comprises:
receiving the assistance information for the receiver node processing the PDU set transmitted from a second communication node.

19. The first communication node of claim 18, wherein receiving the assistance information for the receiver node processing the PDU set transmitted from the second communication node comprises:
receiving the assistance information for the receiver node processing the PDU set transmitted from the second communication node during a procedure of establishing a PDU session, a quality of service, QoS, flow, a bearer or a logical channel corresponding to the PDU set, and/or, during a procedure of modifying a PDU session, a quality of service, QoS, flow, a bearer or a logical channel corresponding to the PDU set; or
transmitting a first request message to the second communication node, wherein the first request message is used to request the assistance information for the receiver node processing the PDU set; and receiving the assistance information for the receiver node processing the PDU set transmitted from the second communication node.

20. The first communication node of claim 19, wherein the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set of a first priority.

21. The first communication node of any one of claims 18 to 20, wherein the first communication node comprises a terminal, and receiving the assistance information for the receiver node processing the PDU set transmitted from the second communication node comprises:
receiving the assistance information for the receiver node processing the PDU set transmitted from an access network node or a core network node.

22. The first communication node of any one of claims 18 to 20, wherein the first communication node comprises an access network node, and receiving the assistance information for the receiver node processing the PDU set transmitted from the second communication node comprises:
receiving the assistance information for the receiver node processing the PDU set transmitted from a terminal or a core network node.

23. The first communication node of any one of claims 18 to 20, wherein the first communication node comprises a distributed unit of an access network node, and receiving the assistance information for the receiver node processing the PDU set transmitted from the second communication node comprises:
receiving the assistance information for the receiver node processing the PDU set transmitted from a central unit of the access network node.

24. The first communication node of any one of claims 15 to 23, wherein the receiver node comprises a terminal, an access network node, a core network node, an application layer or an application layer server.

25. A second communication node, comprising a memory, a transceiver and a processor,
wherein the memory is used for storing a computer program, the transceiver is used for receiving and transmitting data under control of the processor, and the processor is used for reading the computer program in the memory and performing the following operations:
transmitting assistance information for a receiver node processing a packet data unit, PDU, set to a first communication node.

26. The second communication node of claim 25, wherein the assistance information for the receiver node processing the PDU set comprises one or more of the following:
in case that all PDUs in the PDU set are correctly received, the receiver node uses information comprised in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

27. The second communication node of claim 25 or 26, wherein transmitting the assistance information for the receiver node processing the PDU set to the first communication node comprises:
transmitting the assistance information for the receiver node processing the PDU set to the first communication node during a procedure of establishing a PDU session, a quality of service, QoS, flow, a bearer or a logical channel corresponding to the PDU set, and/or, during a procedure of modifying a PDU session, a quality of service, QoS, flow, a bearer or a logical channel corresponding to the PDU set; or
receiving a first request message transmitted from the first communication node, wherein the first request message is used to request the assistance information for the receiver node processing the PDU set; and transmitting the assistance information for the receiver node processing the PDU set to the first communication node based on the first request message.

28. The second communication node of any one of claims 25 to 27, wherein the second communication node comprises a terminal, an access network node, a core network node or a central unit of an access network node.

29. An apparatus for packet data unit, PDU, set transmission, comprising:
an obtaining unit, used for obtaining assistance information for a receiver node processing a PDU set; and
a first transmitting unit, used for transmitting the PDU set based on the assistance information for the receiver node processing the PDU set.

30. The apparatus of claim 29, wherein the assistance information for the receiver node processing the PDU set comprises one or more of the following:
in case that all PDUs in the PDU set are correctly received, the receiver node uses information comprised in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

31. The apparatus of claim 29, wherein the receiver node processing the PDU set comprises one or more of the following:
configuring transmission of the PDU set, scheduling transmission of the PDU set, discarding the PDU set, assigning a priority to the PDU set, and processing the PDU set based on the priority of the PDU set.

32. The apparatus of claim 29 or 30, wherein obtaining the assistance information for the receiver node processing the PDU set comprises:
receiving the assistance information for the receiver node processing the PDU set transmitted from a second communication node.

33. The apparatus of claim 32, wherein receiving the assistance information for the receiver node processing the PDU set transmitted from the second communication node comprises:
receiving the assistance information for the receiver node processing the PDU set transmitted from the second communication node during a procedure of establishing a PDU session, a quality of service, QoS, flow, a bearer or a logical channel corresponding to the PDU set, and/or, during a procedure of modifying a PDU session, a quality of service, QoS, flow, a bearer or a logical channel corresponding to the PDU set; or
transmitting a first request message to the second communication node, wherein the first request message is used to request the assistance information for the receiver node processing the PDU set; and receiving the assistance information for the receiver node processing the PDU set transmitted from the second communication node.

34. The apparatus of claim 33, wherein the first request message is used to request one or more of the following:
assistance information for the receiver node processing a first PDU set;
assistance information for the receiver node processing a first type of PDU set;
assistance information for the receiver node processing a PDU set corresponding to a first PDU session;
assistance information for the receiver node processing a PDU set corresponding to a first QoS flow;
assistance information for the receiver node processing a PDU set corresponding to a first bearer or a first logical channel;
assistance information for the receiver node processing a PDU set corresponding to a first service; or
assistance information for the receiver node processing a PDU set of a first priority.

35. The apparatus of any one of claims 32 to 34, wherein receiving the assistance information for the receiver node processing the PDU set transmitted from the second communication node comprises:
a terminal receives the assistance information for the receiver node processing the PDU set transmitted from an access network node or a core network node.

36. The apparatus of any one of claims 32 to 34, wherein receiving the assistance information for the receiver node processing the PDU set transmitted from the second communication node comprises:
an access network node receives the assistance information for the receiver node processing the PDU set transmitted from a terminal or a core network node.

37. The apparatus of any one of claims 32 to 34, wherein receiving the assistance information for the receiver node processing the PDU set transmitted from the second communication node comprises:
a distributed unit of an access network node receives the assistance information for the receiver node processing the PDU set transmitted from a central unit of the access network node.

38. The apparatus of any one of claims 29 to 37, wherein the receiver node comprises a terminal, an access network node, a core network node, an application layer or an application layer server.

39. An apparatus for packet data unit, PDU, set transmission, comprising:
a second transmitting unit, used for transmitting assistance information for a receiver node processing a PDU set to a first communication node.

40. The apparatus of claim 39, wherein the assistance information for the receiver node processing the PDU set comprises one or more of the following:
in case that all PDUs in the PDU set are correctly received, the receiver node uses information comprised in the PDU set;
in case that a first ratio of PDUs in the PDU set are correctly received, the receiver node recovers the PDU set based on the correctly received PDUs;
in case that a first quantity of PDUs in the PDU set are correctly received, the receiver node recovers the PDU set based on the correctly received PDUs;
in case that a front second quantity of PDUs in the PDU set are correctly received, the receiver node recovers the PDU set based on the correctly received PDUs;
in case that a front second ratio of PDUs in the PDU set are correctly received, the receiver node recovers the PDU set based on the correctly received PDUs; or
a maximum duration for the receiver node receiving the PDU set starting from reception of a first PDU in the PDU set.

41. The apparatus of claim 39 or 40, wherein transmitting the assistance information for the receiver node processing the PDU set to the first communication node comprises:
transmitting the assistance information for the receiver node processing the PDU set to the first communication node during a procedure of establishing a PDU session, a quality of service, QoS, flow, a bearer or a logical channel corresponding to the PDU set, and/or, during a procedure of modifying a PDU session, a quality of service, QoS, flow, a bearer or a logical channel corresponding to the PDU set; or
receiving a first request message transmitted from the first communication node, wherein the first request message is used to request the assistance information for the receiver node processing the PDU set; and transmitting the assistance information for the receiver node processing the PDU set to the first communication node based on the first request message.

42. A computer-readable storage medium, wherein the computer-readable storage medium stores a computer program, the computer program is used to cause a computer to perform the method of any one of claims 1 to 10, or the method of any one of claims 11 to 14.
